# EUROPÄISCHE PATENTSCHRIFT

(11) **EP 2 149 131 B1**
(45) Veröffentlichungstag und Bekanntmachung des Hinweises auf die Patenterteilung: **03.04.2013**
(21) Anmeldenummer: 08759674.8
(22) Anmeldetag: 16.05.2008
(51) Int. Cl.: G08G 1/16, G01C 21/26, G06K 9/00

(54) **VERFAHREN UND VORRICHTUNG ZUR ERKENNUNG VON VERKEHRSRELEVANTEN INFORMATIONEN**
METHOD AND DEVICE FOR IDENTIFYING TRAFFIC-RELEVANT INFORMATION
PROCÉDÉ ET DISPOSITIF D'IDENTIFICATION D'INFORMATIONS IMPORTANTES POUR LE TRAFIC

(30) Priorität: 25.05.2007 DE 102007024695
(43) Veröffentlichungstag der Anmeldung: 03.02.2010
(73) Patentinhaber: Continental Teves AG & Co. OHG, 60488 Frankfurt (DE); ADC Automotive Distance Control Systems GmbH, 88131 Lindau (DE); Continental Engineering Services GmbH, 60489 Frankfurt am Main (DE)
(72) Erfinder: GROITZSCH, Stephan, 69469 Weinheim (DE); FECHNER, Thomas, 88142 Wasserburg (DE); SCHORN, Matthias, 64367 Mühltal (DE); KRESSEL, Ulrich, 89075 Ulm (DE)
(86) Internationale Anmeldenummer: PCT/EP2008/056031
(87) Internationale Veröffentlichungsnummer: WO 2008/145543

(56) Entgegenhaltungen:
- EP-A- 1 503 354
- EP-B- 1 114 371
- DE-A1- 19 938 266

## Beschreibung

Die Erfindung betrifft ein verfahren und eine Vorrichtung zur Erkennung von verkehrsrelevanten Informationen in einem fahrenden Fahrzeug gemäß dem Oberbegriff der Ansprüche 1 und 12. Verkehrsrelevante Informationen können insbesondere Verkehrzeichen sein, die beispielsweise die zulässige Höchstgeschwindigkeit angeben. Neben expliziten Verkehrszeichen bezieht sich die Erfindung aber grundsätzlich auf alle Informationen, die optisch erfasst werden können und die ein bestimmtes Fahrverhalten vorgeben. Es ist vorgesehen, dass die Bilddaten eines visuellen Sensors, insbesondere einer in Fahrtrichtung blickenden optischen Kamera, und die Kartendaten eines Navigationssystems zur Erkennung jeweils vorausgewertet und die Ergebnisse der Vorauswertung zusammengeführt und interpretiert werden.

Viele Entwicklungen in modernen Kraftfahrzeugen dienen dazu, den Fahrer während des Fahrens auf verkehrsrelevante Informationen aufmerksam zu machen, um das Fahren insgesamt sicherer zu gestalten. Hierzu zählt insbesondere die Angabe der aktuell gültigen Höchstgeschwindigkeit, die neben einer reinen zusätzlichen Information für den Fahrer auch zur Erzeugung von Gefahrenmeldungen oder zum direkten Eingriff in die Geschwindigkeit des Fahrzeugs durch Bremsen oder auch Beschleunigen verwendet werden kann.

Seit geraumer Zeit sind Navigationssysteme bekannt, in denen neben dem Straßenverlauf und dem Straßentyp auch eine jeweils gültige Geschwindigkeitsbegrenzung mit eingegeben ist. Die Qualität dieser fest in den Straßenkarten eingegebenen Geschwindigkeitsbegrenzung hängt jedoch in erheblichem Maße von der Vollständigkeit und Aktualität der digitalisierten Karten ab. Nach einer Änderung von Geschwindigkeitsbegrenzungen dauert es erfahrungsgemäß eine geraume Zeit, bis diese neuen Geschwindigkeitsinformationen Eingang in die digitalen Kartendaten finden. Ein weitaus größeres Problem stellt dar, dass die digitalen Straßenkarten häufig in den Navigationssystemen gespeichert sind und durch den Nutzer erfahrungsgemäß vergleichsweise selten aktualisiert werden, da dies mit nicht unerheblichen Kosten verbunden ist.

Systematisch noch schwieriger ist es, temporäre Informationen zu erfassen, die beispielsweise durch Schilderbrücken an Autobahnen mit dem Verkehrsfluss angepassten Informationen und Geschwindigkeitsbegrenzungen oder an Baustellen vorgegeben werden. Gerade diese wechselnden Informationen sind besonders sicherheitsrelevant, da die dem Fahrer eines Kraftfahrzeugs so vorgegebenen Geschwindigkeitsbegrenzungen oder sonstigen Regeln dem aktuellen Verkehrsfluss oder einer akuten Gefahrensituation angepasst sind. Diese können durch die vorbeschriebenen Navigationssysteme jedoch nicht erfasst werden.

Hierzu schlägt die DE 199 38 261 A1 vor, temporäre Ortsgegebenheiten oder persönliche Fahrereindrücke streckenbezogen mit zu berücksichtigen, indem automatisch oder manuell eingebbare, temporäre Ortsgegebenheiten, wie beispielsweise temporäre Geschwindigkeitsbegrenzungen, Stauwarnungen oder dgl., als variable elektronische Streckenmarker setzbar sind, die bei wiederholtem Befahren der Stecke angezeigt werden und/oder auf den automatisch geregelten Betrieb des Kraftfahrzeuges regelnd eingreifen. Hierbei besteht jedoch das besondere Problem, dass diese Informationen in der Regel erst bei nochmaligem Befahren einer strecke zur Verfügung stehen und gerade dann nicht abrufbar sind, wenn der Fahrer eine ihm unbekannte Strecke zum ersten Mal fährt.

Die DE 199 38 267 A1 schlägt ein System zur elektronischen Erkennung von Verkehrszeichen vor, die über eine Videokamera erfasst, nachfolgend gedeutet und innerhalb des Fahrzeugs angezeigt werden. Die erkannten Verkehrszeichen sollen in einer navigierbaren, elektronischen Streckenkarte standortbezogen abgespeichert werden, um die Qualität der digitalen Karte zu verbessern und eine bessere Korrelation von Verkehrszeichen zu navigierten Streckendaten zu ermöglichen. In Ergänzung wird hierzu durch die DE 199 38 266 A1 vorgeschlagen, bei nicht zweifelsfreier Erkennung eines Verkehrszeichens beziehungsweise eines von mehreren Verkehrszeichen, automatisch eine logische Abwägung derart durchzuführen, dass weitergehende Verkehrsflussparameter und/oder Verkehrszeichen zur Deutung mit herangezogen werden und daraus die minimalst mögliche Geschwindigkeitsbegrenzung ermittelt wird. Die Abspeicherung dieser Daten erfolgt Standortkorreliert, wobei dem Fahrer eine Korrekturmöglichkeit eingeräumt wird.

Die DE 103 54 910 A1 offenbart ein autonomes Fahrzeug, das mit einem selbststeuernden Navigationssystem ausgestattet ist und am Straßenrand aufgestellte Verkehrszeichen beachtet. Eine Kamera nimmt dazu entlang der Autobahn aufgestellte Verkehrszeichen auf. Ein Bildprozessor analysiert diese Bilder und ermittelt den in den Verkehrszeichen enthaltenen Zeicheninhalt. Gleichzeitig sind in einer Navigations-Daterrbank Karteninformationen über die Autobahn gespeichert. Eine elektronische Steuereinheit mit künstlicher Intelligenz ermittelt nun eine gegenwärtige Position des eigenständig fahrenden Kraftfahrzeugs und einen Straßenzustand auf der Basis der in der Navigations-Datenbank gespeicherten Karteninformationen und dem von dem Bildprozessor gelesenen Zeicheninhalt. Aufbauend auf dem Ergebnis der Ermittlungen steuert ein Prozessor dann eine Lenkoperation, eine Geschwindigkeits-Verringerungs/Erhöhungs-Operation und eine mit dem Selbststeuerungs-Navigationsbetrieb verbundene Operation. Dieses System ist jedoch zunächst auf Autobahnen begrenzt, da dort die verwendeten Zeichen limitiert und eine Interpretation und Erkennung der Zeichen wesentlich einfacher ist als auf vielen anderen Straßen, insbesondere in Städten mit oft unübersichtlicher Beschilderung.

Die EP 1 114 371 B1 beschreibt ein Verfahren und eine Vorrichtung zur verkehrszeichenerkennung und Navigation. Bei einem Erkennen von Verkehrszeichen werden Verkehrszeichenerkennungsdaten erstellt und Navigationsdaten zur Lokalisierung des Fahrzeugs bereitgestellt, wobei die Verkehrszeichenerkennungsdaten und die Navigationsdaten miteinander abgeglichen und gegebenenfalls aktualisiert werden. Hierzu werden diese Daten einer gemeinsamen Auswerteeinheit zugeleitet, die eine aktuell gültige Geschwindigkeitsbeschränkung ermittelt und gegebenenfalls Steuersignale generiert.

Alle vorbeschriebenen Systeme haben jedoch mit dem Problem zu kämpfen, dass die aufgrund der Bilddatenerkennung gewonnenen Daten sehr umfangreich sind und die beschriebene Datenverarbeitung häufig nicht in Echtzeit erfolgen kann, zumindest wenn alle Bilddaten entsprechend ausgewertet werden.

Aus diesem Grund schlägt die EP 1 145 186 B1 ein System mit mindestens einem kartenbasierten Navigationssystem und einem System zum Anzeigen von Inhalten durch von einer Kamera aufgenommenen Verkehrszeichen vor, bei dem das System zur Verkehrszeichenerkennung mit erhöhter Leistung zu arbeiten beginnt, wenn auf Grundlage von kartenbasierten Informationen bekannt wird, dass das Fahrzeug einen Bereich passiert, der bezüglich der Erkennung von Verkehrszeichen problematisch ist. Dazu wird ein Multiprozessorsystem zur Nutzung freier Datenkapazitäten im gesamten Kraftfahrzeug ausgenutzt. Hierbei besteht allerdings das Problem, dass die erhöhte Rechenkapazität nur dann zur Verfügung steht, wenn dem zugrundeliegenden kartenbasierten System bereits Informationen darüber vorliegen, dass eine für die Bilderfassung gegebenenfalls schwierig auszuwertende Situation entstehen könnte.

Die EP 1 503 354 A1 zeigt ein Verfahren zur Generierung von Verkehrshinweisen durch die Interpretation von Verkehrsszenarien und Navigationsinformation in einem Fahrzeug, das die Merkmale des Obergriffs von Anspruch 1 umfasst. Verkehrszeichen können durch eine videobasierte Erfassung erkannt werden bzw. Verkehrszeicheninformationen können in der digitalen Karte eines Navigationssystems enthalten sein. Diese Eingangsinformationen werden einem Situationsbewertungsmodul zugeführt, das mittels Relevanzbewertung, Priorisierung, Geometrie- und Topologie-Bewertung bzw. Konsistenzbewertung aus den Eingangsinformationen Verkehrshinweise erzeugt. Verkehrsregeln werden in unterschiedlichen Bewertungsschritten berücksichtigt und können beispielweise aus Länderinformationen bezüglich des aktuellen Landes sowie der Interpretation von Verkehrsregeln im aktuellen Land des Navigationssystems entnommen werden.

Demgegenüber ist es die Aufgabe der Erfindung, eine Möglichkeit zur Erkennung verkehrsrelevanter Informationen auf der Basis von Bilddaten eines visuellen Sensors und Kartendaten eines Navigationssystems vorzuschlagen, welche die erkannten Bilddaten und die erkannten Kartendaten einer gemeinsamen Analyse unterzieht, einfach anpassbar ist und schnell verlässliche Informationen liefert. Beispielsweise soll das vorgeschlagene System eine Information über die aktuell zulässige Höchstgeschwindigkeit ausgeben.

Diese Aufgabe wird erfindungsgemäß mit den Merkmalen der Ansprüche 1 und 12 gelöst.

Bei dem Verfahren zur Erkennung von verkehrsrelevanten Informationen der eingangs genannten Art ist dazu insbesondere vorgesehen, dass die Bilddaten in einer ersten Szeneninterpretation nach enthaltenen verkehrsrelevanten Informationen durchsucht und auf die relevanten Bilddaten verdichtet werden. Die Bildrohdaten werden in der vorgelagerten Aufbereitung 7 mit Verfahren aus der Bildverarbeitung wie der Kantenfindung, der Kreisfindung, des Trackings, der Klassifikation mit Hilfe eines trainierten Klassifikators bearbeitet. Das Ergebnis sind dann detektierte und einer Klasse zugeordnete Verkehrszeichen. Diese wiederum werden in der szeneinterpretation Bilddaten 10 als Unterblock von dem Fusionsmodul 2 auf die relevanten Informationnen verdichtet, eine Interpretation der jeweiligen "Szene" wird durchgeführt.Die verkehrsrelevanten Informationen können dabei bestimmte Verkehrszeichen, insbesondere die Geschwindigkeit begrenzende Verkehrszeichen, Fahrbahnmarkierungen, Hindernisse oder dergleichen sein, die Auswirkungen auf das Fahrverhalten und insbesondere die zulässige oder angemessene Höchstgeschwindigkeit haben. Ferner werden die Karteninformationen in einer zweiten Szeneninterpretation nach enthaltenen verkehrsrelevanten Informationen durchsucht und ebenso auf relevante Karteninformationen verdichtet. Die verkehrsrelevanten Informationen der Kartendaten können beispielsweise im Kartenmaterial eingegebene Informationen zu Geschwindigkeitsbegrenzungen, Überholverbot oder sonstigen aktuellen Informationen eines Telematiksystems, wie Unfälle, Hindernisse, Baustellen und dergleichen, sein. Auch Informationen über topologische Gegebenheiten, wie beispielweise Bereich einer Abfahrt, Kreisverkehr, sowie Informationen über den aktuell befahrenen Straßenabschnitt, wie die Straßenklasse, Anzahl der Fahrspuren, Straßenverlauf inner- oder außerorts, Rechts- oder Linksverkehr, Land, gehen hierbei ein. Gegebenenfalls können die erste und zweite Szeneninterpretation bestimmte Informationen auch austauschen, um erste Unklarheiten bei der Erkennung von verkehrsrelevanten Informationen in den Bilddaten oder den Kartendaten anhand der jeweils anderen, zur Verfügung stehenden Daten auszuräumen und eine effektive Bildverdichtung vornehmen zu können. Die verdichteten Bildinformationen können vorzugsweise als Vektoren in einem definierten Datenformat ausgegeben werden.

Anschließend werden die als relevant erkannten und verdichteten Bild- und Kartendaten einem Regelwerk und einem Zustandsautomaten zur Interpretation der Bild- und Kartendaten zugeführt, wobei das Regelwerk die Bilddaten und die Kartendaten auswertet und eine auszuführende Aktion an den Zustandsautomaten weitergibt. Der Zustandsautomat führt aufgrund der ihm durch das Regelwerk vorgegebenen, auszuführenden Aktion eine Transition zwischen vordefinierten Zuständen durch und gibt eine der Transition oder dem durch die Transition erreichten (neuen) zustand zugeordnete Information aus.

Erfindungsgemäß sind in dem Zustandsautomaten Zustände definiert, die Eigenschaften des fahrenden Kraftfahrzeuges und gegebenenfalls der Umgebung charakterisieren. Solche Informationnen enthalten beispielsweise die Geschwindigkeit des Fahrzeuges, das Ansprechen von sicherheitsrelevanten Sensoren wie, der Gierraten, dem Beschleunigungs- oder Verzögerungsdaten, Angaben über die Art und den Zustand der Straße, Statusangaben zu dem visuellen sensor und/oder dem Kartenmaterial, insbesondere dessen Alter, und/oder dergleichen. Es wird erfindungsgemäß auf Daten aus dem Sensorcluster eines ESP-System zugegriffen. Die von dem erfindungsgemäßen System zu berücksichtigende Kombinationen von Fahrzeug- oder Umgebungseigenschaften sind als Zustände des Zustandsraums vordefiniert und charakterisieren - losgelöst von einer regelkonformen Interpretation des Zustands anhand der Erkennung von verkehrsrelevanten Informationen - den Zustand, in dem sich das fahrende Kraftfahrzeug in seiner Umgebung gerade befindet.

In der zeitlichen Entwicklung kann sich der Zustand des fahrenden Fahrzeugs ändern. Dies geschieht beispielsweise dann, wenn das Fahrzeug aus einem Bereich ohne Geschwindigkeitsbegrenzung in einen Bereich begrenzter Geschwindigkeit einfährt, der insbesondere durch ein Verkehrszeichen, beispielsweise aber auch durch eine bestimmte bauliche Situation der Straße (zweispurige Straße mit befestigter Mittelleitplanke) oder sonstige Gegebenheiten definiert sein kann. Sobald die Bilddaten des visuellen Sensors und/oder die Kartendaten eines Navigationssystems das Vorliegen einer derartigen verkehrsrelevanten Information ermitteln, werden die verdichteten Informationen in dem Regelwerk ausgewertet und das Ergebnis dieser Auswertung als auszuführende Aktion an den zustandsautomaten übersandt. Der Zustandsautomat wertet die auszuführende Aktion des Regelwerks als Transition in seinem Zustandsraum, bei dem ausgehend von dem Anfangszustand in einen neuen oder gegebenenfalls wieder denselben Endzustand gewechselt wird. Die Transition oder der neu erreichte Zustand kann je nach Art der Transition mit einer bestimmten, dem Zustand zugeordneten Informationsausgabe verbunden sein, beispielsweise dem Hinweis an den Autofahrer, dass er aus einem geschwindigkeitsbegrenzungsfreien Straßenabschnitt in einen geschwindigkeitsbegrenzten Abschnitt mit der Geschwindigkeit von 80 km/h eingefahren ist.

Je nach Implementierung des erfindungsgemäßen Systems kann diese durch den Zustandsautomaten ausgegebene Information neben einer Information des Fahrers auch zum unmittelbaren Eingriff in das Kraftfahrzeug durch Entfalten beispielsweise einer Bremswirkung umgesetzt werden, wobei eine Vorgabe einer Geschwindigkeit für einen Limiter, eine Vorgabe einer Geschwindigkeit für Adaptive Cruise Control erfindungsgemäß angedacht ist, wenn das Kraftfahrzeug schneller fährt als es die aktuellen verkehrsrelevanten Informationen über die maximale Höchstgeschwindigkeit anzeigen.

Das erfindungsgemäße System weist in seiner Struktur einen modularen Aufbau auf, der es ermöglicht, die Funktionen des erfindungsgemäßen Verfahrens sowie der zugehörigen Vorrichtung einfach zu ändern und anzupassen. So können beispielweise in der Szeneninterpretation neue Verkehrschilder oder sonstige Informationen eingepflegt werden, die zu von dem System bereits verwertbaren verdichteten Bild- oder Kartendaten weiterverarbeitet werden, ohne dass weitere Anpassungen in dem Regelwerk oder dem Zustandsautomaten notwendig sind.

Auch die Aufteilung der Recheneinheit in ein Regelwerk, das die regelkonforme Auflösung widersprüchlicher Situationen in den bereitgestellten Eingangsdaten ermöglicht, und einen Zustandsautomaten, der den von einer Regelinterpretation im Wesentlichen freien Zustand des Kraftfahrzeugs und der Umgebung definiert, können Regelsätze leicht geändert und adaptiert werden. Beispielsweise ist es so möglich, Regelsätze für verschiedene Länder einfach vorzugeben und in das System modular nachzuladen, indem das Regelwerk bei einem Grenzübertritt aktualisiert wird. Alternativ können bei Verwendung lediglich eines Regelwerks bestimmte Regeln in einem Land aktiviert/deaktiviert werden und es ist angedacht das Regelwerk ländespezifisch vollständig auszutauschen. Eine weitere Alternative ist der länderspezifische Austausch von Regeln im Regelwerk, die abhängig sind von länderspezifischen Anforderungen bezüglich der vorliegenden Rechtsnormen für den Straßenverkehr. Änderungen in dem Zustandsautomaten sind dabei in der Regel nicht notwendig, weil dort der von der Regelinterpretation grundsätzlich unabhängige Zustand des Kraftfahrzeugs definiert ist.

Die einzelnen Einheiten oder Module des Systems können beliebig komplex aufgebaut werden, ohne dass der einfache modulare Aufbau des Gesamtsystems geändert wird. Dies ermöglicht auch bei der Erkennung komplexer Daten eine zügige Echtzeitverarbeitung. Mit geringem Aufwand kann so auch eine Anpassung an eventuell in Zukunft denkbare andere Eingabequellen (beispielsweise Fahrzeugdaten Dritter aus Telematik-Anwendungen) erfolgen, auf die sich vorliegende Erfindung auch bezieht.

Erfindungsgemäß ist es besonders vorteilhaft, wenn in dem Regelwerk die inhaltliche Interpretation der relevanten Bild- und Kartendaten anhand spezifischer Regelsätze erfolgt und die durch das Regelwerk vorgegebene Aktion ein aufgrund der erkannten Regel einzuhaltendes Verhalten parametrisiert. Damit wird der Teil der Erkennung verkehrsrelevanter Informationen, der eine inhaltliche Bewertung der erfassten Bild- und/oder Kartendaten erforderlich macht, in einen logisch eigenständigen Block integriert, der bei einer von außen vorgegebenen Änderung, beispielsweise durch Änderung der Leistungsfähigkeiten der Eingangssignalquellen, durch Änderung der Straßenverkehrsordnung oder Fahrt in ein anderes Land mit geänderten Verkehrsregeln, einfach angepasst werden kann. Dazu ist es vorteilhaft, ein transparentes, leicht anzupassendes Regelwerk auszuwählen, unter anderem auch, um eine einfache Anpassung an unterschiedliche Ländervarianten zu ermöglichen.

Eine erfindungsgemäß besonders vorteilhaft verwendbare Abbildung des Regelwerks kann durch eine Matrix erreicht werden, die durch einen Algorithmus auswertbar ist. Dies bietet sich insbesondere dann an, wenn die relevanten Bild- und Kartendaten sowie gegebenenfalls weitere Daten wie Statusinformationen über den Zustand des visuellen Sensors oder Fahrzeuginformationen wie Geschwindigkeit, Umgebungstemperatur, Straßenzustand (Nässe, Schnee, Glatteis), ESP-Daten oder dergleichen als Vektorinformationen vorliegen und dem Regelwerk und Zustandsautomaten in dieser Form übermittelt werden. Durch eine geeignete Matrixoperation lässt sich dann aus den erkannten Bild- beziehungsweise Kartendaten in mathematisch einfacher Form eine entsprechende Aktion ableiten. Das Regelwerk wird zwar in Form zweier Arrays abgelegt, zur Auswertung der Regeln werden allerdings keine "klassischen" Matrizenoperationen verwendet.

Gemäß einer besonders bevorzugten Ausführungsform weist der Zustandsautomat definierte Zustände auf, in denen sich das Fahrzeug und/oder seine Umgebung befinden kann (oder darf), wobei die auszuführenden Aktionen des Regelwerks in dem Zustandsautomaten eine Transition eines definierten Zustands auf einen anderen definierten Zustand oder auf sich selbst bewirken. Durch die erfindungsgemäße Definition eines Zustandsraums mit vorausgewählten, vorgegebnen Zuständen wird ein einfaches, modulares System geschaffen, in dem eine Aussage über die Auswirkungen einer Regel aufgrund des Erkennens verkehrsrelevanter Informationen ohne hohe Rechenleistung sowohl zur Definition eines neuen Zustands von Fahrzeug und/oder Umgebung als auch zur Ausgabe von Informationen in einem Display oder an eine Fahrzeugsteuerung erreicht werden kann.

Hierzu ist es besonders vorteilhaft, wenn jede Transition selbst in dem Zustandsautomaten mit einer Ausgabe von Informationen verbunden ist, beispielsweise zu einem Anzeigeninstrument des Fahrzeugs. Auf diese weise wird bei einer durchzuführenden Transition eine erforderliche Datenausgabe besonders schnell realisiert.

Erfindungsgemäß meldet der Zustandsautomat seinen aktuellen Zustand auch an das Regelwerk zurück, damit das Regelwerk bei der Interpretation der relevanten Bild- oder Kartendaten auch den Zustand des Fahrzeugs und/oder der Umgebung mit berücksichtigen kann. Um dies zu erreichen, können die relevanten, verdichteten Bilddaten und die relevanten, verdichteten Kartendaten zeitgleich dem Regelwerk und dem Zustandsautomaten zugeführt werden, so dass der aktuelle Zustand durch den Zustandsautomaten gegebenenfalls noch während der Auswertung der Regel in dem Regelwerk zurückgemeldet wird. Sofern dies bei bestimmten Regeln gewünscht ist, kann die Regel beispielsweise auch vorsehen, dass eine aktuelle Zustandsinformation vor Auswertung der Regel in dem Regelwerk vorhanden sein muss.

Erfindungsgemäß kann der Zustandsautomat in eine Hauptzustandsmaschine, welche insbesondere das Ausgabeverhalten des Zustandsautomaten abbildet und beispielsweise den Zustand des Fahrzeug charakterisierende Informationen verarbeitet, und eine oder mehrere Umgebungszustandsmaschinen aufgeteilt werden, welche besondere und insbesondere temporär veränderliche Umgebungsbedingungen des Fahrzeugs abbilden, beispielsweise eine Baustellen- oder wechselverkehrszeichenstrecke. Durch die Aufteilung des Zustandsautomaten in mehrere verschiedene Zustandsmaschinen kann auch eine parallele Verarbeitung mehrerer Transitionen aufgrund einer durch das Regelwerk vorgegebenen, auszuführenden Aktion umgesetzt werden.

Gemäß einer besonders bevorzugten Ausführungsform des erfindungsgemäßen Verfahrens senden die erste und die zweite Szeneninterpretation bei dem Verdichten auf relevante Bild- oder Kartendaten, d.h. bei dem Vorliegen und Erkennen verkehrsrelevanter Daten, ein Triggersignal an eine Trigger-Steuerung, welche dann ein Gesamttriggersignal für das Rechenwerk und den Zustandsautomaten erzeugt. Das Gesamttriggersignal bewirkt, dass das Regelwerk und der Zustandsautomat die an ihren internen Eingängen anliegenden verdichteten bzw. relevanten Bild- und Kartendaten verarbeiten. Nach Erhalt des Gesamttriggersignals bestimmt das Regelwerk die auszuführende Aktion und der Zustandsautomat ermittelt aus den vorliegenden Informationen seinen Zustand, damit er nach Erhalt der auszuführenden Aktion eine Transition aus seinem Ausgangszustand in einen neuen Zustand durchführen kann. Erfindungsgemäß kann das Regelwerk nach Abschluss seiner Regelinterpretation und gegebenenfalls gemeinsam mit der Ausgabe der Aktion ein zusätzliches Triggersignal an den Zustandsautomaten senden, damit dieser die Transition unmittelbar vornimmt.

Gemäß einer einfachen Ausführungsform kann die Trigger-Steuerung eine ODER-Verknüpfung der beiden Triggersignale der ersten und zweiten Szeneninterpretation zur Erzeugung des Gesamttriggersignals bilden.

Eine bevorzugte Variante der Trigger-steuerung sieht jedoch vor, bei Anliegen eines ersten Triggersignals von der ersten oder der zweiten Szeneninterpretation einen Zähler, beispielsweise einen Entfernungszähler, der die aktuelle Fahrzeuggeschwindigkeit integriert, zu aktivieren und entweder bei Ablauf eines maximalen Zählerwerts, im Beispiel also einer maximalen zurückgelegten Entfernung, oder dem Anliegen des zweiten Triggersignals von der zweiten oder der ersten Szeneninterpretation das Gesamttriggersignal zu erzeugen. Damit können zeitliche Asynchronitäten zwischen verschiedenen Daten abgefangen werden und der optimale Zeitpunkt für die Auswertung der Daten durch das Regelwerk und den Zustandsautomaten definiert werden. Vorzugsweise können Regelwerk und Zustandsautomat das Gesamttriggersignal zur gleichen Zeit erhalten, damit die Regelauswertung und der im Zustandsautomat erkannte Zustand auf den selben Daten beruhen und die durch die Aktion des Regelwerks ausgelöste Transition auch von dem richtigen Zustand im Zustandsautomaten ausgeht. Vorteilhaft ist es angedacht in einer weiteren Ausführungsform das Gesamttriggersignal GT derart generiert werden, dass bei Anliegen des Triggers von der Vorverarbeitung der Bilderkennungsdaten sofort das Gesamttriggersignal GT ausgelöst und lediglich bei Anliegen des Triggers von der Vorverarbeitung der Karteninformationen gewartet wird.

Vorteilhafterweise werden in der ersten und/oder zweiten Szeneninterpretation anhand vorgegebener Kriterien relevante Bild- und/oder Kartendaten selektiert. Dazu können zu verschiedenen Zeitpunkten erfasste relevante Bild- und/oder Kartendaten in einen zeitlichen Zusammenhang gestellt werden. Die zu verschiedenen Zeitpunkten durch den Sensor detektierten Verkehrszeichen oder sonstigen Informationen werden also in einen Gesamtzusammenhang gestellt und hierdurch beispielsweise der Zeitpunkt ermittelt, an dem ein Verkehrszeichen durch das fahrende Kraftfahrzeug tatsächlich passiert wird. Ferner kann aus der Kenntnis der Kamera- beziehungsweise Sensorposition und dem Ort des Verkehrzeichens auf der Sensorfläche, beispielsweise den Pixeln einer CCD-Kamera, eine örtliche Auswahl relevanter Bilder getroffen werden, wobei eine zeitliche und örtliche Korrelation zwischen den Signalen eine noch genauere Interpretation der Szene zulässt. Die örtliche und zeitliche Korrelation bei Daten bietet sich beispielsweise bei Schilderbrücken an, bei denen die für die Fahrspur relevanten Informationen ohne eine ortsaufgelöste Detektierung nur schwer zu ermitteln sind. Im Rahmen von Kartendaten ist es ferner möglich, aus dem derzeitigen Geschwindigkeitsvektor des Kraftfahrzeugs eine Vorschau der in Kürze vermutlich relevanten Informationen zu erzeugen. In diesem Zusammenhang ist es sinnvoll, wenn die erste und zweite Szeneninterpretation insbesondere die bereits verdichteten Bild- oder Kartendaten austauschen, damit erkannte Informationnen einer Szeneninterpretation bei der anderen Szeneninterpretation herangezogen werden können.

Insbesondere damit die erste und zweite Szeneninterpretation relativ zueinander in einer vergleichbaren Geschwindigkeit arbeiten, kann erfindungsgemäß vorgesehen werden, dass die Bilddaten des visuellen Sensors in einer der Szeneninterpretation vorgelagerten Aufbereitung auf eine Vorauswahl zu untersuchender Bilddaten und eine Statusinformation (Kamerastatusdaten) reduziert werden. Die Statusinformation kann beispielsweise den Qualitätszustand der Kamera (Dunkelheit, verschmutzte Windschutzscheibe oder dergleichen) anzeigen. Auch kann diese Statusinformation im Rahmen des Regelwerks verwendet werden, um bei abweichenden Informationen zwischen Bild- und Kartendaten eine Aussage zu treffen, welche der beiden Daten mit höherer Wahrscheinlichkeit zutreffend sind.

Wie bereits erwähnt können die erste und die zweite Szeneninterpretation erfindungsgemäß Informationen austauschen, um eine optimale Verdichtung der Bild- und Kartendaten in jeder Szeneninterpretation zu erreichen. Insbesondere sollten das Erkennen verkehrsrelevanter Informationen in einer der Szeneninterpretationen unmittelbar der anderen Szeneninterpretation übermittelt werden.

Zusätzlich ist es besonders vorteilhaft, wenn Fahrzeugrohdaten, beispielsweise Fahrzeugsensordaten wie ESP, Geschwindigkeit oder dergleichen, und/oder Kamerastatusdaten, beispielsweise Helligkeit, Bildqualität oder dergleichen, bei dem Prozess des Erkennens verkehrsrelevanter Informationen insgesamt zur Verfügung stehen, insbesondere in den Szeneninterpretationen, dem Regelwerk und/oder dem Zustandsautomaten.

Neben dem vorbeschriebenen Verfahren bezieht sich die Erfindung auch auf eine Vorrichtung zur Erkennung von verkehrsrelevanten Informationen in einem fahrenden Fahrzeug mit einem Anschluss an das System eines virtuellen Sensors zum Erhalten von Bilddaten, einem Anschluss an ein Navigationssystem zum Erhalten von Kartendaten und einem Anschluss an ein Anzeigeinstrument zum Darstellen oder Verarbeiten der Ergebnisse der Erkennung. Die erfindungsgemäß vorgeschlagene Vorrichtung ist insbesondere zur Durchführung der vorbeschriebenen Verfahrensschritte eingerichtet.

Dazu weist die Vorrichtung Mittel zur Szeneninterpretation zur Verdichtung der erhaltenen Bilddaten des visuellen Sensors und der Kartendaten des Navigationssystems sowie zur Weiterleitung der verdichteten Bild- und Kartendaten an eine Recheneinheit mit einem Regelwerk und einem Zustandsautomaten auf. Die Mittel zur Szeneninterpretation können im Falle der Verarbeitung von Bilddaten insbesondere Einrichtungen mit einer Bildverarbeitungs- und Erkennungssoftware sein. Im Falle der Kartendaten des Navigationssystems können die Mittel zur Szeneninterpretation insbesondere Filtermittel sein, welche die Kartendaten auf die gewünschten verkehrsrelevanten Informationen filtern.

Das Regelwerk ist erfindungsgemäß dazu eingerichtet, die von der Szeneninterpretation erhaltenen, verdichten Bild- und Kartendaten auszuwerten und auszuführende Aktionen an den Zustandsautomaten weiterzuleiten. Der erfindungsgemäße Zustandsautomat ist dazu eingerichtet, aufgrund der auszuführenden Aktion in seinem Zustandsraum mit vordefinierten Zuständen eine Transition durchzuführen und dem neuen Zustand oder der Transition zugeordnete Informationen über den Anschluss an das Anzeigeinstrument auszugeben. Das Anzeigeinstrument kann dabei ein optisches Display, eine akustische Ausgabeeinrichtung oder ein Steuergerät sein, welches unmittelbar in Fahrzeugfunktionen eingreift und beispielsweise ein Bremsung initiiert, wenn das Fahrzeug schneller ist als es eine vorgegebene Höchstgeschwindigkeit erlaubt. Es ist auch angedacht, dass eine Verknüpfung zu anderen Fahrerassistenzsystemen, wie beispielsweise Cruise Control, Adaptive Cruise Control oder Limiter, hergestellt wird.

Gemäß einer besonders bevorzugten Ausführungsform ist den Mitteln zur ersten und zweiten Szeneninterpretation eine Trigger-Steuerung (Trigger) zur Erzeugung eines Gesamttriggersignals nachgeschaltet, welches insbesondere als Startsignal für das Regelwerk dient und der Zustandsautomat wird wegen der Überwachung der Gültigkeitslängen von Verkahrszeichen immer ausgeführt. Falls ein Zeichen nicht mehr gültig zu sein scheint, kann der Zustandsautomat das Regelwerk wiederum triggern. Der Zustandsautomat kann je nach Ausgestaltung des erfindungsgemäßen Konzepts jedoch auch durch ein gesondertes Triggersignal des Regelwerks angestoßen werden.

Gemäß einer vorteilhaften Ausgestaltung der erfindungsgemäßen Vorrichtung können die Mittel zur ersten und zweiten Szeneninterpretation, der Trigger und die Recheneinheit mit dem Regelwerk und dem Zustandsautomaten ein gemeinsames Fusionsmodul bilden, in dem die Verbindungen zwischen den einzelnen Einheiten durch besonders schnelle interne Schnittstellen realisiert sind, die weniger störanfällig sind als externe Schnittstellen. Vorzugsweise kann das gesamte Fusionsmodul als eine Geräteeinheit ausgebildet sein, die eine Recheneinheit mit speicher, Rechenwerk und externen Anschlüssen aufweist, und in der das zuvor beschriebene Verfahren implementiert ist. Natürlich ist es auch möglich, das Fusionsmodul auf mehrere, separate Geräte aufzuteilen, oder aber das Fusionsmodul direkt auf dem Steuergerät der Kamera laufen zu lassen.

In dem Fusionsmodul können auch die Mittel zur vorgelagerten Aufbereitung der Bilddaten enthalten sein, so dass die Kamera beziehungsweise der visuelle Sensor und gegebenenfalls andere Sensoren unmittelbar an das Fusionsmodul angeschlossen werden können. Dies kann auch durch Abgriff der entsprechenden Informationen auf einem Datenbus erfolgen. Dann kann die Aufbereitung sämtlicher Daten in dem erfindungsgemäßen Fusionsmodul stattfinden, dessen Ausgangsschnittstelle vorzugsweise auch wieder an den Datenbus anschlossen wird und die verkehrsrelevanten Informationen in einem standardisierten, durch verschiedene andere Geräte des Fahrzeugs auswertbaren Datenformat zur Verfügung stellt.

Erfindungsgemäß stellt also der modulare Aufbau des vorgeschlagenen Systems (Verfahren und Vorrichtung) zur Erkennung von verkehrsrelevanten Informationen einen besonderen Vorteil bei der Implementierung derartiger Einrichtungen in einem Kraftfahrzeug dar, weil die Aufteilung der Interpretation der kombinierten Bild- und Kartendaten in einem Regelwerk und einem Zustandsautomaten einfach und flexibel handhabbar ist. Die Interpretationsvorgaben können in ein transparentes und leicht handhabbares Regelwerk integriert werden, das leicht an mögliche Änderungen angepasst werden kann. Das Regelwerk enthält die eigentliche Entscheidungslogik, die auf den zustandsautomaten mit vergleichsweise geringer Komplexität angewendet wird, um die entsprechenden Ausgaben zu Erzeugen. Änderungen des Regelwerks lassen sich programmtechnisch leicht verwalten und gegebenenfalls auch im Rahmen von üblichen Inspektionen aktualisieren. Außerdem stellt die Verwendung von Zustandsautomaten ein programmtechnisch sehr robustes System dar, das auch bei sicherheitsrelevanten Anwendungen eine hohe Prozesssicherheit bietet und überraschenderweise trotz des statischen Aufbaus auch zur Beschreibung von Zuständen eines fahrenden Kraftfahrzeugs im Bereich der Erkennung verkehrsrelevanter Informationen, insbesondere Verkehrszeichen und Geschwindigkeitsbegrenzungen, eingesetzt werden kann.

Weitere Merkmale, Vorteile und Anwendungsmöglichkeiten der vorliegenden Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: schematisch die Einbindung einer erfindungsgemäßen Vorrichtung zur Erkennung von verkehrsrelevanten Informationen in ein Kraftfahrzeug und
- Fig. 2: den Aufbau der erfindungsgemäßen Vorrichtung im Detail.

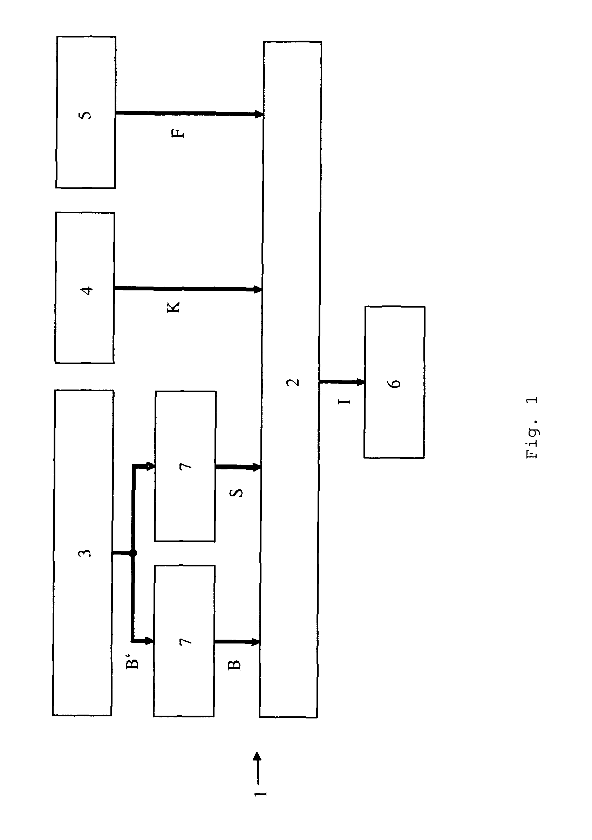

Die in Fig. 1 schematisch dargestellte erfindungsgemäße Vorrichtung 1 zur Erkennung von verkehrsrelevanten Informationen, insbesondere von Verkehrszeichen, weist ein sogenanntes Fusionsmodul 2 mit Anschlüssen an einen als Kamera ausgebildeten visuellen Sensor 3, ein Navigationssystem 4 und ein Fahrzeuginformationssystem 5 auf. Über die Anschlüsse werden von der Kamera 3 Bilddaten B, von dem Navigationssystem Kartendaten K und von dem Fahrzeuginformationssystem 5, das beispielsweise in einen Fahrzeug CAN-Bus eingebunden sein kann, Fahrzeugdaten F an das Fusionsmodul 2 übermittelt, welches aus diesen Daten die gewünschten verkehrsrelevanten Informationen I ermittelt.

Die durch das Fusionsmodul 2 ermittelten verkehrsrelevanten Informationen I, beispielsweise die derzeit gültige Höchstgeschwindigkeit, werden durch das Fusionsmodul 2 an ein Anzeigeinstrument 6 ausgegeben. Das Anzeigeinstrument 6 kann ein optisches Display sein, welches der Fahrerinformation dient. Ferner kann das Anzeigeinstrument eine Steuerschnittstelle zu einer Fahrzeugsteuerung sein, die beispielsweise auf die Geschwindigkeit des Fahrzeugs automatisch einwirkt, wenn eine über der aktuellen Höchstgeschwindigkeit liegende Fahrzeuggeschwindigkeit festgestellt wird. Allgemein kann das Anzeigeinstrument eine beliebige Einrichtung sein, welche die durch das Fusionsmodul 2 erfindungsgemäß ermittelten verkehrsrelevanten Informationen I weiterverarbeitet.

Bevor die Bilddaten B der Kamera 3 dem eigentlichen Fusionsmodul 2 zugeführt werden, findet eine vorgelagerte Aufbereitung 7 statt, in welcher die unmittelbar von der Kamera 3 stammenden Bildrohdaten B' durch einen Bilderkennungsalgorithmus zur Vorselektion möglicherweise verkehrsrelevanter Informationen I untersucht, wie durch Verfahren der klassischen Bildbearbeitung mit Kanten- / Kreisdetektion und anschließender Klassifikation, und bspw. durch Löschen nicht interessierender Bildbereiche aufbereitet werden. Die aufbereiteten Bilder werden dann als eigentliche Bilddaten B dem Fusionsmodul 2 zugeleitet. Die Bildrohdaten B' werden in einer parallelen vorgelagerten Aufbereitung 7 auch nach Statusinformationen der Kamera 3 untersucht, die als zusätzliche Kamerastatusdaten S dem Fusionsmodul 2 zugeleitet werden.

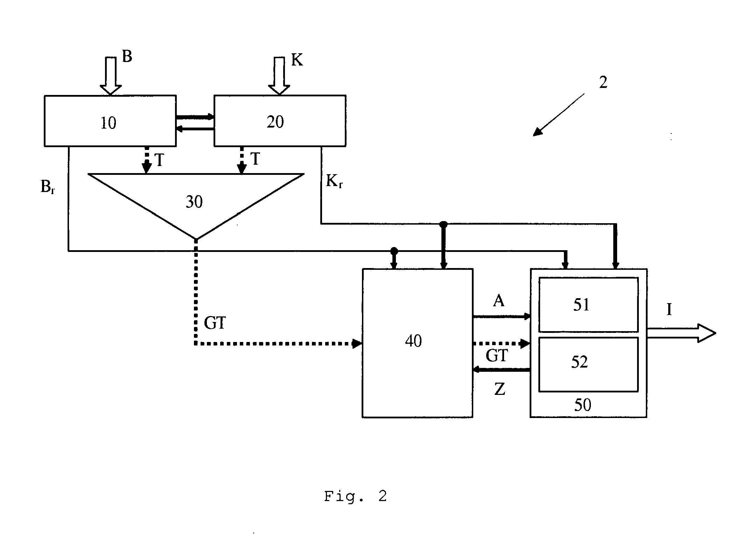

Die Bilddaten B und die Kamerastatusdaten S stellen Zwischenergebnisse eines ersten Auswertungsschrittes dar, dem die Kamerarohdaten B' der Kamera 3 unterworfen werden. Diese Vorauswertung kann sowohl in die Kamera 3 mit integriert sein als auch im Rahmen der erfindungsgemäßen Anwendung als erster Verfahrensschritt innerhalb des Fusionsmoduls 2 ausgeführt werden. Bevor die eigentliche Funktionsweise des Fusionsmoduls 2 unter Bezug auf Fig. 2 näher erläutert wird, soll das technische Umfeld zum besseren Verständnis noch einmal beleuchtet werden.

Ziel der vorliegenden Erfindung ist es, in einem fahrenden Fahrzeug eine Möglichkeit zur Erkennung verkehrsrelevanter Informationen zu schaffen, die diese Informationen besonders zuverlässig zur Verfügung stellt. Dazu werden verschiedene, zur Verfügung stehende Rohdaten ausgenutzt, die insbesondere durch einen visuellen Sensor beziehungsweise eine Kamera 3 und ein Navigationssystem 4 als Bilddaten B und Kartendaten K geliefert werden.

Derartige Systeme sind für sich genommen bereits bekannt. Werden jedoch eine kameragestützte Algorithmik beispielsweise im Rahmen der vorgeschlagenen vorgelagerten Aufbereitung 7 zur Erkennung von verkehrszeichen oder sonstigen relevanten Informationen und die digitale Straßenkarte eines Navigationssystems 4 zur Erkennung entsprechender Verkehrszeichen in digitalen Karten jeweils für sich betrachtet, so bergen beide Systeme wesentliche Nachteile.

Bei einer kameragestützten Verkehrszeichenerkennung können beispielsweise in Abhängigkeit von Umgebungslichtbedingungen (Lichtverhältnisse) Verkehrszeichen nicht in allen Situationen zuverlässig und korrekt erkannt werden. Außerdem bestehen Unsicherheiten bei beschädigten und teilverdeckten Verkehrszeichen, wobei auch weitere Fehlerquellen für eine nicht sichere visuell-optische Erfassung von verkehrszeichen oder ähnlichen verkehrsrelevanten Informationen vorstellbar sind. Auch die Informationen einer digitalen Straßenkarte beinhalten einige Nachteile. So können die in der digitalen Straßenkarte als Kartendaten K enthaltenen Informationen veraltet sein. Des Weiteren sind temporäre Geschwindigkeitsregelungen beispielsweise in Baustellen und die Geschwindigkeitsinformationen von Wechselverkehrszeichen, die zunehmend zur intelligenten Verkehrsführung eingesetzt werden, in den digitalen Daten nicht verfügbar. Aus der digitalen Straßenkarte werden Informationen über die Topologie des jeweils befahrenen Straßenabschnitts (z.B. Bereich einer Ausfahrt, Bereich eines Kreisverkehrs,) sowie ein Abbiegeereignis (Verlassen des Most Probable Paths) bereit gestellt und im Fusionsmodul verarbeitet.

Mit der Erfindung sollen die Vorteile der beiden Einzelsysteme vereint werden, sodass eine zuverlässige Information I über die aktuell zulässige Höchstgeschwindigkeit oder eine sonstige verkehrsrelevante Information bereitgestellt werden kann. Dabei soll das erfindungsgemäße System einfach in ein Fahrzeug integrierbar und auch später noch erweiterbar sein. Gleichzeitig muss eine zügige Bildbearbeitung erfolgen können, die ein Erfassen und Auswerten der verkehrsrelevanten Informationen I in Echthzeit ermöglicht.

Ein solches System wird im Rahmen des erfindungsgemäßen Fusionsmoduls 2 geschaffen, das nachfolgend näher erläutert wird.

Das Fusionsmodul 2 erhält die noch als Rohdaten vorliegenden Kartendaten K und die bereits der vorgelagerten Aufbereitung 7 unterzogenen Bilddaten B jeweils über eine externe Schnittstelle. In einer bevorzugten Ausgestaltung werden die Signale B lediglich über eine interne Schnittstelle übertragen. Über nicht dargestellte, weitere externe Schnittstellen werden ferner die Kamerastatusinformationen bzw. -daten S und die Fahrzeugdaten F eingespeist, wobei die vorgenannten externen Schnittstellen vollständig oder teilweise auch durch einen einzigen Fahrzeug-Datenbus, beispielsweise einen CAN-Bus, gebildet sein können. Die eingespeisten Informationen und Daten, die in Fig. 2 nicht näher bezeichnet sind, stehen dabei sämtlichen dargestellten Einheiten zur Verfügung.

Die Bilddaten B werden einer ersten Szeneninterpretation 10 und die Kartendaten K einer zweiten Szeneninterpretation 20 zugeführt, die anhand vorgegebener Kriterien die entscheidenden Bild- und/oder Kartendaten selektieren und auf relevante Bilddaten Bᵣ beziehungsweise Kartendaten Kᵣ verdichten. Die verdichteten Daten Bᵣ und Kᵣ sowie die gegebenenfalls zur Verfügung gestellten Kamerastatusinformationen S und Fahrzeugdaten F werden innerhalb des Fusionsmoduls 2 vorzugsweise als Datenvektoren dargestellt. Die Übertragung erfolgt über interne Schnittstellen, die eine besonders effiziente Datenübertragung ermöglichen. Die externen Schnittstellen können einem unmittelbaren Anschluss an fahrzeugeigene Sensoren, beispielsweise die Kamera 3, dienen. Ferner können die Kartendaten K der digitalen Straßenkarte und/oder Fahrzeugdaten F über einen CAN-Bus übermittelt werden. Auch die Ausgabe der erkannten, verkehrsrelevanten Informationen I an das Anzeigeinstrument 6 kann über einen CAN-Bus erfolgen.

Die relevanten Bilddaten Bᵣ und die relevanten Kartendaten Kᵣ werden ausgehend von den Mitteln zur Szeneninterpretation 10, 20 einem Regelwerk 40 und einem zustandsautomaten 50 zugeführt. Das Regelwerk wertet die Bilddaten Bᵣ und die Kartendaten Kᵣ aus und gibt in Realtion auf diese Auswertung eine auszuführende Aktion A an den zustandsautomaten 50 weiter.

In dem Zustandsautomaten 50 sind definierte Zustände Z vorgegeben, die einen Zustand des fahrenden Kraftfahrzeugs und/oder der unmittelbaren Fahrzeugumgebung repräsentieren. Diese Zustände sind vorzugsweise durch im Wesentlichen objektiv messbare Größen definiert und unterscheiden sich insofern von den Angaben des Regelwerks 40, das aufbauend auf den Messdaten eine Interpretation dieser Messdaten im Sinne von auszuführenden Aktionen vornimmt. Durch diese erfindungsgemäß besonders vorteilhafte Aufteilung zwischen der Ermittlung auszuführender Aktionen in dem Regelwerk 40, das also eine straßenverkehrsordnungskonforme Interpretation der Kartendaten und der Bilddaten vornimmt, beschreibt der Zustandsautomat 50 die möglichen Zustände des Fahrzeugs und dessen Umgebung abschließend. Die verschiedenen, vorab definierten Zustände z müssen also die gesamte Realität abbilden.

Durch diese vereinfachte Darstellung ist es insbesondere möglich, das Fusionsmodul 2 einfach in fahrende Fahrzeuge zu implementieren und mit geringem rechnerischem Aufwand aus den selektierten Daten die relevanten Informationen I zu verdichten und auszugeben. Um dem Regelwerk 40 eine umfassendere Entscheidungsgrundlage zu ermöglichen, meldet der Zustandsautomat 50 den aufgrund der relevanten Bilddaten Bᵣ und der relevanten Kartendaten Kᵣ ermittelten aktuellen Zustand Z an das Regelwerk 40 zurück.

Die durch das Regelwerk 40 vorgegebenen auszuführenden Aktionen A werden innerhalb des Zustandsautomaten 50 durch Transitionen zwischen einem Ausgangszustand und einem Zielzustand umgesetzt, wobei je nach Art der Transition der Ausgangs- und der Zielzustand gleich oder verschieden sein können. Bei dem Ausführen einer Transition und/oder dem Erreichen eines neuen Zustands wird die gewünschte relevante Information I an das Anzeigeinstrument 6 ausgegeben. Die Informationen können als Statusinformation dauerhaft ausgegeben werden. Alternativ kann eine Information des Fahrers lediglich bei einem Wechsel der Geschwindigkeitsbegrenzung erfolgen oder aber eine Warnung des Fahrers bei Überschreiten der aktuell zulässigen Höchstgeschwindigkeit.

Damit das Regelwerk 40 und der Zustandsautomat 50 nicht ständig in Betrieb sind und eine Vielzahl abzuarbeitender Programmschritte vor sich herschieben, die zu einem Daten- und Verarbeitungsstau führen, ist eine abkürzend auch als Trigger bezeichnete Trigger-Steuerung 30 vorgesehen, die von den Szeneninterpretationen 10, 20 der Bilddaten B beziehungsweise Kartendaten K ein Triggersignal T immer dann erhält, wenn eine Szeneninterpretation 10, 20 in den zugeführten Daten B, K eine relevante Information I erkannt und diese zu relevanten Bilddaten Bᵣ beziehungsweise relevanten Kartendaten Kᵣ verdichtet hat. Aufbauend auf diesem Triggersignal T erzeugt der Trigger 30 ein Gesamttriggersignal GT, das dem Regelwerk 40 und dem Zustandsautomaten 50 zugeleitet wird und deren Rechenoperationen initiiert.

Im Folgenden werden die einzelnen Komponenten des Fusionsmoduls 2 noch einmal detailliert erläutert.

Die vorzugsweise in der vorgelagerten Aufbereitung 7 bereits vorverarbeiteten Bilddaten B werden einer Szeneninterpretation 10 für die Bilddaten B zugeführt, deren Ziel es ist, verwertbare Eingangsdaten für das später genauer beschriebene Regelwerk 40 zu erhalten und die Fülle der einzelnen Bilddaten auf die relevanten Informationen zu verdichten. Dazu werden die meist noch als Pixeldaten vorliegenden Bilddaten B im Eingang der Szeneninterpretation 10 in logische Dateninformationen (relevante Bilddaten Bᵣ) umgesetzt, indem die in einem Kamerabild erkannten Informationen in relevante Verkehrsinformationen übersetzt werden, die in der Szenenverarbeitung 10 definiert sind,

Die Bildverarbeitung erfolgt in der vorgelagerten Aufbereitung 7. Die Bilddaten B sind klassifizierte Verkehrszeichen mit zusätzlichen Informationen wie beispielsweise Ablage, Größe, Vertrauensmaß in die Schätzung und Güte der Bildverarbeitung.

So ist die Szeneninterpretation 10 beispielsweise auf das Erkennen bestimmter Verkehrszeichen ausgerichtet, um die derzeit gültige Höchstgeschwindigkeit zu ermitteln.

Neben der Interpretation der Einzelbilder ist es notwendig, die aufeinander folgenden Einzelbilder der Kamera 3 in eine zeitliche Abfolge zu stellen, da ein Verkehrszeichen typischerweise in einer Vielzahl von Einzelbildern vorkommt, wenn Aufnahmen aus einem fahrenden Fahrzeug aufgenommen werden. Dazu werden die zeitlich asynchron detektierten Verkehrszeichen intern getrackt, um ein in mehreren Bildern der Kamera 3 erkanntes Verkehrszeichen einer verkehrsrelevanten Information zuzuordnen. Wird ein in der Szeneninterpretation 10 getracktes Verkehrszeichen beispielsweise über einen bestimmten Zeitraum nicht mehr detektiert, kann davon ausgegangen werden, dass das Fahrzeug dieses Verkehrszeichen passiert hat und nun die durch dieses Verkehrszeichen vorgegebenen Verkehrsregeln gelten. In diesem Fall ist die zeitliche Abfolge (Tracken) dieser Szenen beendet und die Merkmale dafür, dass die Szene "abgeschlossen" ist, sind erfüllt. Die Gesamtszene wird dann in der Szeneninterpretation 10 interpretiert.

Beispielsweise kann die Szeneninterpretation 10 darauf ausgerichtet sein, Daten zur aktuell gültigen Höchstgeschwindigkeit auszuwählen. In diesem Fall bedeutet die Interpretation in der abgeschlossenen Szene konkret, dass nach vorgegebenen Kriterien die für das eigene Fahrzeug relevanten Geschwindigkeitsbegrenzungszeichen oder Aufhebungszeichen ausgewählt und irrelevante Zeichen aussortiert werden. Bei Schilderbrücken, die auf Autobahnen für jede Fahrspur beispielsweise eine eigene Geschwindigkeit vorgeben, können irrelevante Zeichen unter Verwendung der seitlichen Ablage der Zeichen aussortiert werden, sodass die relevanten verkehrsinformationen I auf die für die eigene Fahrspur geltende Geschwindigkeitsbeschränkung verdichtet werden können. Liegt aus der digitalen Straßenkarte die Information vor, dass sich das Fahrzeug im Bereich eines Verzögerungsstreifens befindet, so können entsprechende nur auf der Seite des Streifens angeordnete Zeichen diesem Streifen zugeordnet werden. Nach Abschluss der Szeneninterpretation werden die ermittelten logischen Daten als relevante Bilddaten Bᵣ über eine interne Schnittstelle dem Regelwerk 40 und dem Zustandsautomaten 50 zur Verfügung gestellt.

Analog ist es das Ziel der Szeneninterpretation 20, die von der digitalen Straßenkarte zur Verfügung gestellten Kartendaten K auf relevante Kartendaten Kᵣ zu verdichten. Dies ist grundsätzlich mit der vor beschriebenen Szenenverdichtung 10 für die kameragestützte verkehrszeichenerkennung vergleichbar. Dazu werden aktuelle Karteninformationen mit Karteninformationen einer Vorschau zusammengeführt, um die relevanten Verkehrsinformationen zu verdichten, die nach Abschluss der Szeneninterpretation über eine weitere interne Schnittstelle dem Regelwerk 40 und dem Zustandsautomaten 50 zur Verfügung gestellt werden.

Die zur Verfügung gestellten relevanten Daten Bᵣ und Kᵣ werden vorzugsweise in vektorieller Form übertragen, in der jeder Vektoreintrag einer zuvor definierten Information zugeordnet ist.

Ferner erzeugen die Szeneninterpretationen 10, 20 jeweils ein Triggersignal T, sobald eine Szeneninterpretationen 10, 20 eine im Hinblick auf die zu untersuchenden Informationen relevante Veränderung der Szene im Vergleich zu einem vorherigen Zeitschritt feststellt.

Die Triggersignale T werden einem auch als Trigger-Steuerung bezeichneten Trigger 30 zugeführt, der auf Grundlage dieser Triggersignale T ein Gesamttriggersignal GT erzeugt, das dem Regelwerk 40 und vorzugsweise auch dem Zustandsautomaten 50 zugeführt wird. Bei dem Erhalt des Gesamttriggersignals GT beginnen das Regelwerk 40 und der Zustandsautomat 50 mit der Interpretation bzw. Auswertung der zur Verfügung gestellten relevanten Daten Bᵣ und Kᵣ, wobei das Regelwerk 40 diese Daten nach vorgegebenen und in einer Matrix gespeicherten Regelinformationen interpretiert und der Zustandsautomat 50 aus diesen Daten einen aktuellen Zustand des Fahrzeugs und/oder dessen Umgebung auswertet.

Hierdurch wird in dem vorzugsweise als Rechenwerk aufgebauten Fusionsmodul 2 insgesamt Rechenzeit gespart, da das Regelwerk 40 und der Zustandsautomat 50 nur dann Rechenzeit beanspruchen, wenn eine Änderung der verkehrsrelevanten Informationen I vorliegt. Bis derartige Änderungen vorliegen, steht dagegen den Szeneninterpretationen 10, 20 eine erhöhte Rechenleistung zur Verfügung, um die relevanten Daten aus den Eingangsdaten schnellstmöglich zu verdichten.

Im einfachsten Fall kann der Trigger 30 durch eine ODER-Verknüpfung der beiden Einzel-Triggersignale T realisiert werden. In der dargestellten Ausführung wird das Gesamttriggersignal GT jedoch wie folgt bestimmt. Liegt das Triggersignal T einer Szeneninterpretation 10 oder 20 an, so wird ein Zähler aktiviert, der beispielsweise als Entfernungszähler und als Zeitzähler ausgebildet ist und unter Zugrundelegung der aktuellen Fahrzeuggeschwindigkeit für eine bestimmte Entfernung weiterzählt. Dieser Zähler integriert also die aktuelle Fahrzeuggeschwindigkeit. Liegt vor Ablauf einer vordefinierten maximalen Entfernung das zweite Triggersignal T der anderen Szeneninterpretation 20 oder 10 an, so wird das Gesamttriggersignal GT umgehend aktiviert. Kommt es bis zum Ablauf der maximalen Entfernung des Entfernungszählers nicht zu einer Aktivierung des zweiten Triggersignals T, so wird das Gesamttriggersignal GT mit Ablauf des Zähler beziehungsweise der maximalen Entfernung gesetzt. Dies zeigt an, dass lediglich eine der beiden Szeneninterpretationen 10, 20 eine verkehrsrelevante Information identifizieren konnte.

Mithilfe der Steuerung durch den Trigger 30 können somit zeitliche Asynchronitäten abgefangen werden, die häufig dadurch entstehen, das Verkehrszeichen und deren Ort in den digitalen Karteninformationen häufig nicht identisch zusammenfallen.

Bei Anliegen des Gesamttriggersignals GT wird basierend auf den relevanten Daten Bᵣ und Kᵣ der Szeneninterpretationen 10, 20 ein Regelwerk 40 ausgewertet, das die in den relevanten Daten Bᵣ und Kᵣ enthaltenden Informationen entsprechend den geltenden Verkehrsregeln auswertet. Diese auszuführenden Aktionen A werden in dem Zustandsautomaten 50 in Transitionen umgerechnet, mit denen in dem Zustandsautomaten 50 von einem ersten in einen zweiten Zustand gewechselt wird, der mit dem ersten Zustand auch identisch sein kann. Das Regelwerk 40 kann länderspezifisch ausgeführt sein, um die verschiedenen Verkehrsregeln in unterschiedlichen Staaten berücksichtigen zu können. Die vorgeschlagene Struktur des Regelwerks 40 ermöglicht es auch, flexibel Änderungen in den Verkehrsregeln (beispielsweise aufgrund von Gesetzesänderungen) zu implementieren.

Mit Hilfe des Zustandsautomaten 50 werden verschiedene mögliche Systemzustände des fahrenden Kraftfahrzeugs und/oder der Fahrzeugumgebung abgebildet. Hierbei sieht der Zustandsautomat 50 eine Hauptzustandsmaschine 51 vor, die das Ausgangsverhalten des Fusionsmoduls 2 bestimmt und im Wesentlichen die auszugebenden Informationen I vorgibt. Die Hauptzustandsmaschine 51 kann beispielsweise im Wesentlichen die dem fahrenden Fahrzeug zugeordneten Zustände hinsichtlich der aktuell zulässigen Höchstgeschwindigkeit abbilden.

Die Abbildung besonderer Umgebungsbedingungen, wie beispielsweise eine Baustellen- oder eine WechselverkehrszeichenStrecke, ist durch eine oder mehrere Umgebungszustandsmaschinen 52 möglich. Hierdurch lassen sich die Ergebnisse der Erkennung verkehrsrelevanter Informationen I insgesamt verbessern und die Berechnung der benötigten Informationen beschleunigen. In Abhängigkeit der auszuführenden Aktionen A des Regelwerks 40 werden zwischen dem in dem Zustandsautomaten 50 beziehungsweise der Hauptzustandsmaschine 51 und/oder den Umgebungszustandsmaschinen 52 Transitionen zwischen den Zuständen vorgenommen, wobei die Ausgabe der verkehrsrelevanten Informationen I an die Transition oder das Erreichen eines neuen Zustands gekoppelt werden kann. In beiden Fällen wird also eine dem Zustand zugeordnete Information I ausgegeben.

Die Fahrzeugdaten F, welche insbesondere auch die aktuelle Geschwindigkeit des Fahrzeugs über Telematiksysteme oder über eine Schnittstelle Kamerasystem Navigationssystem empfangene Informationen anderer Fahrzeuge oder Barken in der Umgebung des Fahrzeugs umfassen, gehen als zusätzliche Informationen in die im Fusionsmodul 2 vorgenommene Auswertung mit ein und können vorzugsweise auch in Vektorform vorliegen. Begrenzungstypen werden hierdurch anpassbar gemacht und können als beschränkend, unbeschränkend oder veränderbar ausgestaltet werden.

Mit der Erfindung ist es also möglich, die Vorteile der beiden Einzelsysteme "kameragestützte Verkehrszeichenerkennung" und "digitale Straßenkarte" zu vereinigen. Durch das Fusionsmodul 2 beziehungsweise das darin ablaufende Verfahren ist es möglich, dem Fahrer eine Information über verkehrsrelevante Informationen und insbesondere die aktuell zulässige Höchstgeschwindigkeit auch bei widrigen Umgebungsbedingungen zu geben, auch wenn lediglich temporäre Geschwindigkeitsbeschränkungen oder durch Wechselverkehrszeichen dargestellte Informationen vorliegen.

### Bezugszeichenliste:

- 1: Vorrichtung zur Erkennung verkehrsrelevanter Informationen
- 2: Fusionsmodul
- 3: visueller Sensor, Kamera
- 4: Navigationssystem
- 5: Fahrzeuginformationssystem, CAN-Bus
- 6: Anzeigeinstrument
- 7: vorgelagerte Aufbereitung
- 10: Szeneninterpretation Bilddaten
- 20: Szeneninterpretation Kartendaten
- 30: Trigger-Steuerung, Trigger
- 40: Regelwerk
- 50: Zustandsautomat
- 51: Hauptzustandsmaschine
- 52: Umgebungsaustandsmaschine

- B: Bilddaten (detektierte und klassifizierte Verkehrszeichen)
- B': Bildrohdaten
- Bᵣ: relevante Bilddaten
- S: Kamerastatusinformationen bzw. -daten
- K: Kartendaten
- Kᵣ: relevante Kartendaten
- T: Triggersignal
- GT: Gesamttriggersignal
- F: Fahrzeugdaten
- I: verkehrrelevanten Informationen, Höchstgeschwindigkeit
- A: auszuführende Aktion
- Z: Zustände

## Patentansprüche

1. Verfahren zur Erkennung von verkehrsrelevanten Informationen (I) in einem fahrenden Fahrzeug, bei dem Bilddaten (B) eines visuellen Sensors (3) und Kartendaten (K) eines Navigationssystems (4) zur Erkennung jeweils vorausgewertet und die Ergebnisse der Vorauswertung zusammengeführt und interpretiert werden,
wobei
- die Bilddaten (B) in einer ersten Szeneninterpretation (10) nach enthaltenen verkehrsrelevanten Informationen (I) durchsucht und auf relevante Bilddaten (Bᵣ) verdichtet werden, und
- die Kartendaten (K) in einer zweiten Szeneninterpretation (20) nach enthaltenen verkehrsrelevanten Informationen (I) durchsucht und auf relevante Kartendaten (Kᵣ) verdichtet werden,
**dadurch gekennzeichnet,**
- **dass** die relevanten Bilddaten (Bᵣ) und die relevanten Kartendaten (Kᵣ) einem Regelwerk (40) und einem Zustandsautomaten (50) zur Interpretation der Bild- und Kartendaten zugeführt werden, wobei das Regelwerk (40) eine Auflösung widersprüchlicher Situationen in den relevanten Bilddaten (Bᵣ) und den relevanten Kartendaten (Kᵣ) entsprechend den geltenden Verkehrsregeln ermöglicht und eine auszuführende Aktion (A) an den Zustandsautomaten (50) weitergibt und wobei der Zustandsautomat (50) aufgrund der ihm durch das Regelwerk (40) vorgegebenen, auszuführenden Aktion (A) eine Transition in seinem Zustandsraum mit vordefinierten Zuständen (Z), die Eigenschaften des fahrenden Kraftfahrzeuges und gegebenenfalls der Umgebung grundsätzlich unabhängig von den geltenden Verkehrsregeln charakterisieren, durchführt, bei dem ausgehend von einem vordefinierten Anfangszustand in einen neuen oder gegebenenfalls wieder denselben vordefinierten Endzustand gewechselt wird, und eine der Transition oder dem durch die Transition erreichten Zustand (Z) zugeordnete verkehrsrelevante Information (I) ausgibt und
- wobei der Zustandsautomat (50) seinen aktuellen Zustand (Z) an das Regelwerk (40) zurückmeldet, damit das Regelwerk (40) bei der Interpretation der relevanten Bild- order Kartendaten (Bᵣ, Kᵣ) auch den Zustand (Z) des Fahrzeugs und/oder der Umgebung berücksichtigen kann.

2. Verfahren nach Anspruch 1,
**dadurch gekennzeichnet,**
**dass** in dem Regelwerk (40) die inhaltliche Interpretation der relevanten Bild- und Kartendaten (Bᵣ, Kᵣ) anhand spezifischer Regelsätze erfolgt, und die durch das Regelwerk (40) vorgegebene Aktion (A) ein aufgrund einer erkannten Regel einzuhaltendes Verhalten parametrisiert.

3. Verfahren nach einem der vorhergehenden Ansprüche,
**dadurch gekennzeichnet,**
**dass** der Zustandsautomat (50) die der Transition oder dem durch die Transition erreichten Zustand (Z) zugeordnete Information (I) zu einem Anzeigeninstrument des Fahrzeugs ausgibt.

4. Verfahren nach einem der vorhergehenden Ansprüche,
**dadurch gekennzeichnet,**
**dass** der Zustandsautomat (50) in eine Hauptzustandsmaschine (51), welche den Zustand des Fahrzeugs charakterisierende Informationen verarbeitet, und eine oder mehrere Umgebungszustandsmaschinen (52), die veränderliche Umgebungsbedingungen des Fahrzeugs abbilden, aufgeteilt wird.

5. Verfahren nach einem der vorhergehenden Ansprüche,
**dadurch gekennzeichnet,**
**dass** die erste und die zweite Szeneninterpretation (10, 20) bei dem Verdichten auf relevante Bild- oder Kartendaten (Bᵣ, Kᵣ) ein Triggersignal (T) an eine Trigger-Steuerung (30) senden, welche ein Gesamttriggersignal (GT) für das Regelwerk (40) und den Zustandsautomaten (50) erzeugt, wobei das Gesamttriggersignal (GT) bewirkt, dass das Regelwerk (40) und der Zustandsautomat (50) die an ihren internen Eingängen anliegenden relevanten Bild- und Kartendaten (Bᵣ, Kᵣ) verarbeiten.

6. Verfahren nach Anspruch 5, **dadurch gekennzeichnet, dass** die Trigger-Steuerung (30) eine ODER-Verknüpfung der beiden Triggersignale (T) der ersten und zweiten Szeneninterpretation (10, 20) zur Erzeugung des Gesamttriggersignals (GT) bildet.

7. Verfahren nach Anspruch 6, **dadurch gekennzeichnet, dass** die ODER-Verknüpfung eine verzögerte ODER-Verknüpfung ist.

8. Verfahren nach Anspruch 7, **dadurch gekennzeichnet, dass** die Trigger-Steuerung (30) bei Anliegen eines ersten Triggersignals (T) von der ersten oder der zweiten Szeneninterpretation (10, 20) einen Zähler aktiviert und entweder bei Erreichen eines maximalen Zählerwerts oder bei Anliegen des zweiten Triggersignals (T) das Gesamttriggersignal (GT) erzeugt.

9. Verfahren nach einem der vorhergehenden Ansprüche,
**dadurch gekennzeichnet,**
**dass** in der ersten und/oder zweiten Szeneninterpretation (10, 20) anhand vorgegebener Kriterien relevante Bild- und/oder Kartendaten (Bᵣ, Kᵣ) selektiert werden, indem zu verschiedenen Zeitpunkten erfasste Bild- und/oder Kartendaten (B, K) in einen zeitlichen Zusammenhang gestellt werden und/oder eine örtliche Auswahl relevanter Bilddaten (Bᵣ) getroffen wird.

10. Verfahren nach einem der vorhergehenden Ansprüche,
**dadurch gekennzeichnet,**
**dass** die erste und die zweite Szeneninterpretation (10, 20) Informationen austauschen.

11. Verfahren nach einem der vorhergehenden Ansprüche,
**dadurch gekennzeichnet,**
**dass** Fahrzeugdaten (F) und/oder Kamerastatusdaten (S) bei dem Erkennen verkehrsrelevanter Informationen (I) zur Verfügung stehen.

12. Vorrichtung zur Erkennung von verkehrsrelevanten Informationen (I) in einem fahrenden Fahrzeug mit einem Anschluss an ein System eines visuellen Sensors (3) zum Erhalten von Bilddaten (B, B'), einem Anschluss an ein Navigationssystem (4) zum Erhalten von Kartendaten (K) und einem Anschluss an ein Anzeigeinstrument (6) zum Darstellen bzw. Verarbeiten der Ergebnisse der Erkennung, welche insbesondere zur Durchführung des Verfahrens nach einem der Ansprüche 1 bis 11 eingerichtet ist,
**dadurch gekennzeichnet,**
- **dass** Mittel zur Szeneninterpretation (10, 20) zur Verdichtung der erhaltenen Bilddaten (B) des visuellen Sensors (3) und der Kartendaten (K) des Navigationssystems (4) auf relevante Bild- und Kartendaten (Bᵣ, Kᵣ) und zur Weiterleitung der relevanten Bild- und Kartendaten (Eᵣ, Kᵣ) an eine Recheneinheit mit einem Regelwerk (40) und einem Zustandsautomaten (50) vorgesehen sind,
- **dass** das Regelwerk (40) dazu eingerichtet ist, eine Auflösung widersprüchlicher Situationen in den relevanten Bild- und Kartendaten (Bᵣ, Kᵣ) entsprechend den geltenden Verkehrsregeln zu ermöglichen und eine auszuführende Aktion (A) an den Zustandsautomaten (50) weiterzugeben, und
- **dass** der Zustandsautomat (50) dazu eingerichtet ist, aufgrund der ihm durch das Regelwerk (40) vorgegebenen, auszuführenden Aktion (A) eine Transition in seinem Zustandsraum mit vordefinierten Zuständen (Z), die Eigenschaften des fahrenden Kraftfahrzeuges und gegebenenfalls der Umgebung grundsätzlich unabhängig von den geltenden Verkehrsregeln charakterisieren, durchzuführen, bei der ausgehend von einem vordefinierten Anfangszustand in einen neuen oder gegebenenfalls wieder denselben vordefinierten Endzustand gewechselt wird, und der Transition oder dem durch die Transition erreichten Zustand (Z) zugeordnete verkehrsrelevante Informationen (I) über den Anschluss an das Anzeigeinstrument (6) auszugeben, wobei der Zustandsautomat (50) seinen aktuellen Zustand (Z) an das Regelwerk (40) zurückmeldet, damit das Regelwerk (40) bei der Interpretation der relevanten Bild- oder Kartendaten (Bᵣ, Kᵣ) auch den Zustand (z) des Fahrzeugs und/oder der Umgebung berücksichtigen kann.

13. Vorrichtung nach Anspruch 12,
**dadurch kennzeichnet,**
**dass** den Mitteln zur ersten und zweiten Szeneninterpretation (10, 20) eine Trigger-Steuerung (30) zur Erzeugung eines Gesamttriggersignals (GT) nachgeschaltet ist, wobei das Gesamttriggersignal (GT) bewirkt, dass das Regelwerk (40) und der Zustandsautomat (50) die an ihren internen Eingängen anliegenden verdichteten bzw. relevanten Bild- und Kartendaten (Bᵣ, Kᵣ) verarbeiten.

14. Vorrichtung nach Anspruch 12 oder 13,
**dadurch gekennzeichnet,**
**dass** die Mittel zur ersten und zweiten Szeneninterpretation (10, 20), die Trigger-Steuerung (30) und die Recheneinheit mit dem Regelwerk (40) und dem Zustandsautomaten (50) in gemeinsames Fusionsmodul (2) bilden, in dem die Verbindungen zwischen den einzelnen Einheiten (10, 20, 30, 40, 50) durch interne Schnittstellen realisiert sind.

## Claims

1. A method for detecting traffic-related information (I) in a moving vehicle, whereby image data (B) from a visual sensor (3) and map data (K) from a navigation system (4) are respectively evaluated in advance for detection purposes and the result of the preliminary evaluation are combined and interpreted
wherein
- the image data (B) in a first scene interpretation (10) is searched for traffic-related information (I) obtained, and is condensed into relevant image data (Bᵣ), and
- the map data (K) in a second scene interpretation (20) is searched for traffic-related information (I) obtained, and is condensed into relevant map data (Kᵣ),
**characterized in that**
- the relevant image data (Bᵣ) and the relevant map data (Kᵣ) is fed to a set of regulations (40) and a finite state machine (50) in order to interpret the image and map data, wherein the set of regulations (40) enables a resolution of contradictory situations in the relevant image data (Bᵣ) and the relevant map data (Kᵣ), according to the valid traffic rules and forwards an action (A) to be executed to the finite state machines (50), and wherein the finite state machine (50) due to the action to be executed (A) specified for it by the set of regulations (40) conducts a transition in its state space which is in principle independent of the valid traffic rules with pre-defined states (Z) which characterise the properties of the moving vehicle and if necessary, the environment, wherein on the basis of a pre-defined initial state, a change is made into a new or, if necessary, back into the same pre-defined end state, and emits traffic-related information (I) which is assigned to the transition or to the state (Z) achieved by the transition, and
- wherein the finite state machine (50) reports back its current state (Z) to the set of regulations (40), so that the set of regulations (40) can also take into account the state (Z) of the vehicle and/or of the environment when interpreting the relevant image or map data (Bᵣ, Kᵣ).

2. A method according to claim 1, **characterized in that** in the set of regulations (40), the interpretation of the content of the relevant image and map data (Bᵣ, Kᵣ) is conducted on the basis of specific guidelines, and the action (A) specified by the set of regulations (40) parameterises a behaviour to be maintained on the basis of a recognised regulation.

3. A method according to any one of the preceding claims, **characterized in that** the finite state machine (50) issues the information (I) which has been assigned to the transition or to the state (Z) achieved by the transition to a display element in the vehicle.

4. A method according to any one of the preceding claims, **characterized in that** the finite state machine (50) is divided into a main state machine (51) which processes information which characterises the state of the vehicle and one or more environment state machines (52) which display the changeable environment conditions of the vehicle.

5. A method according to any one of the preceding claims, **characterized in that** the first and the second scene interpretation (10, 20) transmit a trigger signal (T) to a trigger control device (30) while condensing to relevant image or map data (Bᵣ, Kᵣ), which generates an overall trigger signal (GT) for the set of regulations (40), wherein the effect of the overall trigger signal (GT) is that the set of regulations (40) and the finite state machine (50) process the relevant image and map data (Bᵣ, Kᵣ) which is in contact on their internal inputs.

6. A method according to claim 5, **characterized in that** the trigger control (30) forms an OR connection between the two trigger signals (T) of the first and second scene interpretation (10, 20) in order to generate the overall trigger signal (GT).

7. A method according to claim 6, **characterized in that** the OR connection is a delayed OR connection.

8. A method according to claim 7, **characterized in that** the trigger control (30) activates a counter when a first trigger signal (T) from the first or the second scene interpretation (10, 20) is in contact, and the overall trigger (GT) is generated either when a maximum counter value is reached, or when the second trigger signal (T) is in contact.

9. A method according to any one of the preceding claims, **characterized in that** in the first and/or second scene interpretation (10, 20), relevant image and/or map data (Bᵣ, Kᵣ) is selected on the basis of specified criteria, in which image and/or map data (Bᵣ K) which has been recorded at different points in time is set in a time context and/or a local selection of relevant image data (Bᵣ) is made.

10. A method according to any one of the preceding claims, **characterized in that** the first and the second scene interpretation (10, 20) exchange information.

11. A method according to any one of the preceding claims, **characterized in that** vehicle data (F) and/or camera status data (S) is available during detection of traffic-related information (I).

12. A device for detecting traffic-related information (I) in a moving vehicle with a connection to a visual sensor (3) system for obtaining image data (B, B'), a connection to a navigation system (4) for obtaining map data (K) and a connection to a display instrument (6) for displaying or processing the results of the detection, which is in particular installed for the execution of the method according to any one of claims 1 to 11,
**characterized in that**
- means for scene interpretation (10, 20) are provided for the condensation of the image data (B) obtained from the visual sensor (3) and of the map data (K) from the navigation system (4) to relevant image and map data (Bᵣ, Kᵣ), and for forwarding the relevant image and map data (Bᵣ, Kᵣ) to a computing unit with a set of regulations (40) and a finite state machine (50)
- the set of regulations (40) is designed to enable a resolution of contradictory situations in the relevant image and map data (Bᵣ, Kᵣ) according to the valid traffic rules, and to forward an action (A) to be executed to the finite state machines (50), and
- wherein the finite state machine (50) due to the action to be executed (A) specified for it by the set of regulations (40) conducts a transition in its state space which is in principle independent of the valid traffic rules with pre-defined states (Z) which characterise the properties of the moving vehicle and if necessary, the environment, wherein on the basis of a pre-defined initial state, a change is made into a new or, if necessary, back into the same pre-defined end state, and to emit traffic-related information (I) which is assigned to the transition or to the state (Z) achieved by the transition via the connection to the display instrument (6), wherein the finite state machine (50) reports back its current state (Z) to the set of regulations (40), so that the set of regulations (40) can also take into account the state (Z) of the vehicle and/or of the environment when interpreting the relevant image or map data (Bᵣ, Kᵣ).

13. A device according to claim 12, **characterized in that** a trigger control (30) for generating an overall trigger signal (GT) is downstream of the means for the first and second scene interpretation (10, 20), wherein the effect of the overall trigger signal (GT) is that the set of regulations (40) and the finite state machine (50) process the condensed or relevant image and map data (Bᵣ, Kᵣ) which is in contact on their internal inputs.

14. A device according to either of claims 12 or 13, **characterized in that** the means for the first and second scene interpretation (10, 20), the trigger control (30) and the computing unit with the set of rules (40) and the finite state machine (50) form a joint fusion module (2) in which the connections between the individual units (10, 20, 30, 40, 50) are realised by internal interfaces.

## Revendications

1. Procédé de détection d'informations importantes pour le trafic (I) dans un véhicule en mouvement, dans lequel des données images (B) d'un capteur (3) optique et des données cartographiques (K) d'un système de navigation (4) sont respectivement pré-analysées pour la détection et dans lequel les résultats de la pré-analyse sont rassemblés et interprétés,
- les données images (B) étant, dans une première interprétation de scène (10), examinées à la recherche d'informations importantes pour le trafic (I) contenues et compressées en données images (Bᵣ) importantes, et
- les données cartographiques (K) étant, dans une deuxième interprétation de scène (20), examinées à la recherche d'informations importantes pour le trafic (I) contenues, et compressées en données cartographiques importantes (Kᵣ), **caractérisé en ce que**
- les données images importantes (Bᵣ) et les données cartographiques importantes (Kᵣ) sont conduites à un régulateur (40) et à un automate à états (50) pour l'interprétation des données images et cartographiques, le régulateur (40) permettant une résolution de situations contradictoires dans les données images importantes (Bᵣ) et les données cartographiques importantes (Kᵣ) en fonction des règles de circulation en vigueur, et transmettant une action à exécuter (A) à l'automate à états (50), et l'automate à états (50) exécutant, sur la base de l'action à exécuter (A) qui lui est prédéterminée par le régulateur (40), une transition dans son espace d'état avec des états prédéfinis qui caractérisent des caractéristiques du véhicule en mouvement et éventuellement de l'environnement, en principe indépendamment des règles de circulation en vigueur, dans lequel, en partant d'un état initial prédéfini, il y a changement vers un état final nouveau ou éventuellement de nouveau vers le même état prédéfini, et délivrant une information importante pour le trafic (I) affectée à la transition ou à l'état (Z) atteint par la transition, et
- l'automate à états (50) retournant au régulateur (40) son état actuel pour permettre au régulateur (40), lors de l'interprétation des données images et données cartographiques importantes (Bᵣ, Kᵣ), de prendre également en compte l'état (Z) du véhicule et/ou de l'environnement.

2. Procédé selon la revendication 1,
**caractérisé en ce que**,
dans le régulateur (40), l'interprétation du contenu des données images et données cartographiques importantes (Bᵣ, Kᵣ) s'effectue à l'aide de groupes régulateurs spécifiques, et **en ce que** l'action (A) prédéterminée par le régulateur (40) paramètre un comportement à respecter sur la base d'une règle détectée.

3. Procédé selon une des revendications précédentes,
**caractérisé en ce que**
l'automate à états (50) délivre à un instrument d'affichage du véhicule l'information (I) affectée à la transition ou à l'état (Z) atteint par la transition.

4. Procédé selon une des revendications précédentes,
**caractérisé en ce que**
l'automate à états (50) est divisé en une machine d'état principal (51) qui traite des informations caractérisant l'état du véhicule, et une ou plusieurs machines d'état de l'environnement (52) qui reproduisent des conditions variables de l'environnement.

5. Procédé selon une des revendications précédentes,
**caractérisé en ce que**
la première et la deuxième interprétation de scène (10, 20), lors de la compression en données images et données cartographiques importantes (Bᵣ, Kᵣ), envoient un signal de déclenchement (T) à une commande de déclenchement (30) qui produit un signal de déclenchement global (GT) pour le régulateur (40) et pour l'automate à états (50), le signal de déclenchement global (GT) ayant pour effet que le régulateur (40) et l'automate à états (50) traitent les données images et données cartographiques importantes (Bᵣ, Kᵣ) présentes au niveau de leurs entrées internes.

6. Procédé selon la revendication 5,
**caractérisé en ce que** la commande de déclenchement (30) forme une fonction logique OU des deux signaux de déclenchement (T) de la première et de la deuxième interprétation de scène (10, 20) pour la production du signal de déclenchement global (GT).

7. Procédé selon la revendication 6,
**caractérisé en ce que** la fonction logique OU est une fonction logique OU retardée.

8. Procédé selon la revendication 7,
**caractérisé en ce que**, en présence d'un premier signal de déclenchement (T) de la première ou de la deuxième interprétation de scène (10, 20), la commande de déclenchement (30) active un compteur et produit le signal de déclenchement global (GT) soit lorsqu'une valeur de comptage maximale est atteinte, soit en présence du deuxième signal de déclenchement (T).

9. Procédé selon une des revendications précédentes,
**caractérisé en ce que**,
dans la première et/ou la deuxième interprétation de scène (10, 20), des données images et données cartographiques importantes (Bᵣ, Kᵣ) sont sélectionnées à l'aide de critères prédéterminés, par le fait que, à différents moments, des données image et/ou cartographiques (B, K) détectées sont placées dans un contexte temporel et/ou par le fait qu'une sélection locale de données images importantes (Bᵣ) est effectuée.

10. Procédé selon une des revendications précédentes,
**caractérisé en ce que**
la première et la deuxième interprétation de scène (10, 20) échangent des informations.

11. Procédé selon une des revendications précédentes,
**caractérisé en ce que**
des données de véhicule (F) et/ou des données de statut de caméra (S) sont disponibles lors de la détection d'informations importantes pour le trafic (I).

12. Dispositif pour la détection d'informations importantes pour le trafic (I) dans un véhicule en mouvement avec une connexion à un système d'un capteur (3) optique pour l'obtention de données images (B, B'), une connexion à un système de navigation (4) pour l'obtention de données cartographiques (K), et une connexion à un instrument d'affichage (6) pour la représentation ou respectivement le traitement des résultats de la détection, dispositif qui est aménagé en particulier pour la réalisation du procédé selon une des revendications 1 à 11,
**caractérisé en ce que**
- des moyens pour l'interprétation de scène (10, 20) sont prévus pour la compression des données images (B) obtenues du capteur (3) optique et des données cartographiques (K) du système de navigation (4) en données images et données cartographiques importantes (Bᵣ, Kᵣ), et pour la transmission des données images et données cartographiques importantes (Bᵣ, Kᵣ) à une unité de calcul avec un régulateur (40) et un automate à états (50),
- **en ce que** le régulateur (40) est aménagé pour permettre une résolution de situations contradictoires dans les données images et données cartographiques importantes (Bᵣ, Kᵣ) en fonction des règles de circulation en vigueur, et pour transmettre à l'automate à états (50) une action à exécuter (A), et
- **en ce que** l'automate à états (50) est aménagé pour, sur la base de l'action à exécuter (A) qui lui est prédéterminée par le régulateur (40), effectuer une transition dans son espace d'état avec des états (Z) prédéfinis qui caractérisent des caractéristiques du véhicule en mouvement et éventuellement de l'environnement, en principe indépendamment des règles de circulation en vigueur, dans lequel, en partant d'un état initial prédéfini, il y a changement vers un état final nouveau ou éventuellement de nouveau vers le même état final prédéfini, et pour délivrer, via la connexion à l'instrument d'affichage (6), des informations importantes pour le trafic (I) affectées à la transition ou à l'état Z atteint par la transition, l'automate à états (50) retournant son état (Z) actuel au régulateur (40) pour permettre au régulateur (40), lors de l'interprétation des données images et données cartographiques importantes (Bᵣ, Kᵣ), de prendre également en compte l'état (Z) du véhicule et/ou de l'environnement.

13. Dispositif selon la revendication 12,
**caractérisé en ce**
**qu'**une commande de déclenchement (30) pour la production d'un signal de déclenchement global (GT) est montée en aval des moyens pour la première et la deuxième interprétation de scène (10, 20), le signal de déclenchement global (GT) ayant pour effet que le régulateur (40) et l'automate à états (50) traitent les données images et données cartographiques compressées ou respectivement importantes (Bᵣ, Kᵣ) présentes au niveau de leurs entrées internes.

14. Dispositif selon la revendication 12 ou 13,
**caractérisé en ce que**
les moyens pour la première et la deuxième interprétation de scène (10, 20), la commande de déclenchement (30) et l'unité de calcul, forment, avec le régulateur (40) et l'automate à états (50), un module de fusion (2) commun dans lequel les liaisons entre les différentes unités (10, 20, 30, 40, 50) sont réalisées par des interfaces internes.
